(19) Europäisches Patentamt
European Patent Office
Office européen des brevets

(11) **EP 3 693 785 A1**

(12) **EUROPEAN PATENT APPLICATION**
published in accordance with Art. 153(4) EPC

(43) Date of publication:
**12.08.2020 Bulletin 2020/33**

(21) Application number: **18871626.0**

(22) Date of filing: **27.07.2018**

(51) Int Cl.:
*G02B 27/18* (2006.01)        *G02B 27/28* (2006.01)

(86) International application number:
**PCT/CN2018/097671**

(87) International publication number:
**WO 2019/080569 (02.05.2019 Gazette 2019/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.10.2017 CN 201711009929**

(71) Applicant: **Huawei Technologies Co., Ltd.**
**Longgang District**
**Shenzhen, Guangdong 518129 (CN)**

(72) Inventors:
• **LI, An**
**Shenzhen**
**Guangdong 518129 (CN)**
• **LU, Yadong**
**Shenzhen**
**Guangdong 518129 (CN)**

(74) Representative: **Epping - Hermann - Fischer**
**Patentanwaltsgesellschaft mbH**
**Schloßschmidstraße 5**
**80639 München (DE)**

(54) **PROJECTOR, CAMERA MODULE AND TERMINAL DEVICE**

(57)    Embodiments of this application disclose a projector, a camera module, and a terminal device, and relate to the field of electronic device technologies, to reduce a size of a projector, thereby reducing a size of a camera module and further facilitating development of a terminal device toward a lightweight and thin structure. The projector includes a light source, a first optical device, a second optical device, and a projection device. The light source emits a first light ray with a first polarization direction to a transmission surface of the first optical device; the transmission surface of the first optical device transmits the first light ray with the first polarization direction, so that the transmitted first light ray is emitted to the second optical device; the second optical device turns the transmitted first light ray into a second light ray with a second polarization direction, and emits the second light ray with the second polarization direction to a reflective surface of the first optical device, where the second polarization direction is different from the first polarization direction; the reflective surface of the first optical device reflects the second light ray with the second polarization direction, so that the reflected second light ray is emitted to the projection device; and the projection device diffracts the reflected second light ray, to form a projected light beam.

FIG. 4

## Description

This application claims priority to Chinese Patent Application No. 201711009929.0, filed with the Chinese Patent Office on October 25, 2017 and entitled "PROJECTOR, CAMERA MODULE, AND TERMINAL DEVICE", which is incorporated herein by reference in its entirety.

## TECHNICAL FIELD

This application relates to the field of electronic device technologies, and in particular, to a projector, a camera module, and a terminal device.

## BACKGROUND

A structured light projector plays an important role in many fields. For example, for a three-dimensional (Three Dimensions, 3D) camera module configured to obtain three-dimensional information, light emitted by a structured light projector is shone on an object and captured by a camera, so that depth information of the object can be obtained through cooperation with an algorithm, and then 3D modeling can be performed on an image captured by the camera, to generate a 3D image.

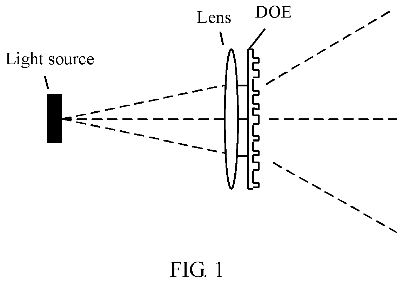

To gain better user experience and more abundant functions, currently terminal devices such as mobile phones or tablets raise a growing demand for a high-precision 3D camera module. A small-sized compact optical projector is a key component of the 3D camera module. FIG. 1 shows a structured light projector, including a light source, a lens, and a diffractive optical element (Diffractive Optical Element, DOE), where centers of the light source, the lens, and the DOE are on a same straight line. A light ray emitted by the light source (for example, a laser light source) is incident into the DOE after passing through the lens, and incident light is diffracted by using the DOE, to project a particular pattern. Currently, in an optical path design of the structured light projector, because a field of view (Field of view, FOV) of the light source is fixed, usually a distance between the light source and the lens needs to be increased to obtain a larger projected pattern. This leads to a relatively large size of the structured light projector, thereby resulting in a relatively large size of a camera module, and hindering integration of the camera module in a lightweight and thin mobile terminal product such as a mobile phone or a tablet.

## SUMMARY

Embodiments of this application provide a projector, camera module, and terminal device, to reduce a size of a projector, thereby reducing a size of a camera module and further facilitating development of a terminal device toward a lightweight and thin structure.

To implement the foregoing objectives, the following technical solutions are used in the embodiments of this application.

According to a first aspect, a structured light projector is provided, including: a light source, a first optical device, a second optical device, and a projection device. The first optical device includes a transmission surface and a reflective surface, where the transmission surface faces the light source, and the reflective surface faces the second optical device; the light source is configured to emit a first light ray with a first polarization direction to the transmission surface of the first optical device; the transmission surface of the first optical device is configured to transmit the first light ray with the first polarization direction, so that the transmitted first light ray is emitted to the second optical device, where the transmitted first light ray has the first polarization direction; the second optical device is configured to: turn the transmitted first light ray into a second light ray with a second polarization direction, and emit the second light ray with the second polarization direction to the reflective surface of the first optical device, where the second polarization direction is different from the first polarization direction; the reflective surface of the first optical device is configured to reflect the second light ray with the second polarization direction, so that the reflected second light ray is emitted to the projection device, where the reflected second light ray has the second polarization direction; and the projection device is configured to diffract the reflected second light ray, to form a projected light beam. In the foregoing solution, the light source emits the first light ray with the first polarization direction to the transmission surface of the first optical device; the first light ray is transmitted through the transmission surface of the first optical device to the second optical device; the second optical device turns the polarization direction of the transmitted first light ray into the second polarization direction, and emits the second light ray with the second polarization direction to the reflective surface of the first optical device, where the second polarization direction is different from the first polarization direction; the reflective surface of the first optical device reflects the second light ray with the second polarization direction, so that the reflected second light ray is emitted to the projection device; and then the projection device diffracts the reflected second light ray, to form a projected light beam. In this process, because the second optical device cooperates with the first optical device to fold a light ray, a size of the light projector is reduced while an optical path long enough is ensured between the light source and a projection module, thereby reducing a size of a camera module and further facilitating development of a terminal device toward a lightweight and thin structure.

In an illustrative implementation, an included angle between a propagation direction of the second light ray with the second polarization direction and a propagation direction of the transmitted first light ray is greater than or equal to 150 degrees; and an included angle between the propagation direction of the second light ray with the second polarization direction and a propagation direction of the reflected second light ray is greater than or equal to 70 degrees, and less than or equal to 110 degrees.

In an illustrative implementation, the first optical device is a polarization beam splitter (polarization beam splitter, PBS); after the first light ray with the first polarization direction is transmitted through the transmission surface of the PBS, the transmitted first light ray is emitted; and after the second light ray with the second polarization direction is reflected through the reflective surface of the PBS, the reflected second light ray is emitted to the projection device.

In an illustrative implementation, the second optical device includes a glass slide and a first reflective element. The glass slide is configured to: turn the transmitted first light ray into a third light ray with a third polarization direction, and emit the third light ray with the third polarization direction to the first reflective element. The first reflective element is configured to reflect the third light ray with the third polarization direction, so that the reflected third light ray is emitted to the glass slide. The glass slide is further configured to turn the reflected third light ray into the second light ray with the second polarization direction. In this process, the glass slide cooperates with the first reflective element, so that the first optical device folds a light ray. For example, the glass slide may be a 1/4 glass slide, and the first reflective element may be a total-reflection mirror.

In an illustrative implementation, the projection device includes a lens and a diffractive optical element. The lens is configured to collimate the reflected second light ray to form a collimated light ray, so that the collimated light ray is emitted to the diffractive optical element, where the collimated light ray has a predefined field of view FOV The diffractive optical element is configured to perform replication and beam expansion on the collimated light ray, to form the projected light beam. For example, the diffractive optical element includes a diffraction grating.

In an illustrative implementation, because the first optical device transmits only the first light ray with the first polarization direction, after an incident light ray enters the first optical device, light rays in a polarization state except the first light ray with the first polarization direction cannot be transmitted. To prevent other light rays in the polarization state from entering the first optical device, the projector further includes a polarizer. The polarizer is disposed between the light source and the first optical device. The light source is configured to emit an incident light ray to the polarizer. The polarizer is configured to let the first light ray with the first polarization direction in the incident light ray pass through, so that the first light ray with the first polarization direction is emitted to the first optical device.

In an illustrative implementation, the light source includes any one of the following: a vertical cavity surface emitting laser VCSEL (vertical cavity surface emitting laser, VCSEL) chip and an edge emitting laser (edge emitting laser, EEL) chip.

In an illustrative implementation, to further reduce the size of the structured light projector, when the light source includes the EEL chip, the light source further includes a second reflective element. The second reflective element is configured to reflect a light ray emitted by the EEL chip, so that the first light ray with the first polarization direction is emitted to the first optical device. A size of the projector in an optical-axis direction of the first optical device directly affects an internal space design of a terminal device. To be specific, a propagation distance of the first light ray with the first polarization direction between the second reflective element and the first optical device directly affects an internal space design of a terminal device. Therefore, the reflecting, by the second reflective element, a light ray emitted by the EEL chip to the first optical device is equivalent to converting a light ray propagation direction. In this way, when an optical distance from the EEL chip to the first optical device is determinate, a propagation distance of an incident light ray between the second reflective element and the first optical device can be shortened by appropriately increasing a propagation distance of the light ray emitted by the EEL chip between the EEL chip and the second reflective element, to help reduce the size of the projector in the optical-axis direction of the first optical device, thereby better improving utilization of an internal space of the terminal device and facilitating device miniaturization. The second reflective element may be a reflective prism or a total-reflection plane mirror.

According to a second aspect, a camera module is provided, including the projector according to any one of the foregoing implementations and a light ray collection module. The projector is configured to emit a projected light beam of a reference structured light pattern to a photographed object. The light ray collection module is configured to receive a reflected light ray after the photographed object reflects the projected light beam, and generate a photographed structured light pattern based on the reflected light ray.

According to a third aspect, a terminal device is provided, including the camera module, a processor, and a memory. Both the camera module and the memory are coupled to the processor. The processor is configured to execute program code in the memory, to implement the following operations: driving the camera module to emit a projected light beam of a reference structured light pattern to a photographed object; controlling the camera module to receive a reflected light ray after the photographed object reflects the projected light beam, and generating a photographed structured light pattern based on the reflected light ray; and obtaining three-dimensional information of the photographed object based on the reference structured light pattern and the photographed structured light pattern, where the three-dimensional information includes at least depth information.

It may be understood that, any one of the foregoing provided camera modules or terminal devices includes the corresponding projector according to the first aspect. Therefore, for beneficial effects that can be obtained by the foregoing provided camera modules or terminal devices, refer to beneficial effects of the projector according to the first aspect and corresponding solutions in the following specific implementations. Details are not described herein again.

**BRIEF DESCRIPTION OF DRAWINGS**

To describe the technical solutions in the embodiments of this application or in the prior art more clearly, the following briefly describes the accompanying drawings required for describing the embodiments or the prior art.

 FIG. 1 is a schematic structural diagram of a projector according to the prior art;
 FIG. 2 is a schematic structural diagram of a terminal device according to an embodiment of this application;
 FIG. 3 is a schematic structural diagram of a camera module according to an embodiment of this application;
 FIG. 4 is a schematic structural diagram of a projector according to an embodiment of this application;
 FIG. 5 is a schematic structural diagram of a first optical device according to an embodiment of this application;
 FIG. 6 is a schematic structural diagram of a projector according to another embodiment of this application;
 FIG. 7 is a schematic structural diagram of a projector according to still another embodiment of this application;
 FIG. 8 is a schematic diagram of distribution of luminous points of a VCSEL chip according to an embodiment of this application;
 FIG. 9 is a schematic diagram 1 of a principle of replication and beam expansion of a diffraction grating according to an embodiment of this application;
 FIG. 10 is a schematic diagram 2 of a principle of replication and beam expansion of a diffraction grating according to an embodiment of this application;
 FIG. 11 is a schematic diagram 3 of a principle of replication and beam expansion of a diffraction grating according to an embodiment of this application;
 FIG. 12 is a schematic structural diagram of a projector according to yet another embodiment of this application;
 FIG. 13 is a schematic diagram of an optical path between a light source and a first optical device according to an embodiment of this application;
 FIG. 14 is a schematic diagram of an optical path between a light source and a first optical device according to another embodiment of this application;
 FIG. 15 is a schematic diagram of an optical path between a light source and a first optical device according to still another embodiment of this application; and
 FIG. 16 is a schematic diagram of an optical path between a light source and a first optical device according to yet another embodiment of this application.

**DESCRIPTION OF EMBODIMENTS**

The following describes the embodiments of this application with reference to the accompanying drawings.

The following terms "first" and "second" are merely intended for description, and shall not be understood as an indication or implication of relative importance or an implicit indication of a quantity of indicated technical features. Therefore, a feature limited by "first" or "second" may explicitly or implicitly include one or more of the features. In the description of the embodiments of the present invention, unless otherwise stated, "a plurality of' means two or more than two.

The embodiments of this application may be applied to any terminal device, for example, a mobile phone, a wearable device, an augmented reality (augmented reality, AR) or virtual reality (virtual reality, VR) device, a tablet, a notebook computer, an ultra-mobile personal computer (ultra-mobile personal computer, UMPC), a netbook, or a personal digital assistant (personal digital assistant, PDA). This is not limited in the embodiments of the present invention.

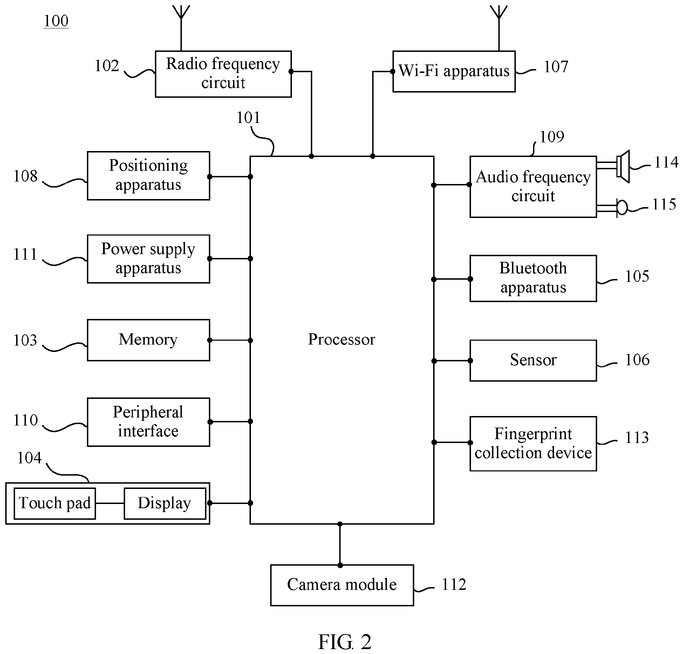

As shown in FIG. 2, the terminal device in the embodiments of this application may be a mobile phone 100. The following gives a detailed description of an embodiment by using the mobile phone 100 as an example. It should be understood that, the mobile phone 100 shown in the figure is only an example of the terminal device; and the mobile phone 100 may have more or fewer components than what are shown in FIG. 2, or may combine two or more components, or may have another different component configuration.

As shown in FIG. 2, the mobile phone 100 may specifically include components such as a processor 101, a radio frequency (radio frequency, RF) circuit 102, a memory 103, a touchscreen 104, a Bluetooth apparatus 105, one or more sensors 106, a Wireless Fidelity (Wireless Fidelity, Wi-Fi) apparatus 107, a positioning apparatus 108, an audio frequency circuit 109, a peripheral interface 110, a power supply apparatus 111, and a camera module 112. These components may be coupled to each other by using one or more communications buses or signal lines (not shown in FIG. 2), to perform communication. A person skilled in the art may understand that, the hardware structure shown in FIG. 2 shall not be construed as any limitation on the mobile phone; and the mobile phone 100 may include more or fewer components than what are shown in the figure, or combine some components, or have another different component arrangement.

The following describes in detail each component of the mobile phone 100 with reference to FIG. 2.

The processor 101 is a control center of the mobile phone 100, and is connected to various parts of the mobile phone 100 by using various interfaces and lines. The processor 101 performs various functions and data processing of the mobile phone 100 by running or executing an application program (which may be referred to as App for short below) stored in the memory 103 and invoking data stored in the memory 103. In some embodiments, the processor 101 may include one or more processing units. For example, the processor 101 may be a Kirin 960 chip manufactured by Huawei Technologies Co., Ltd.

The radio frequency circuit 102 may be configured to receive or send a radio signal during message receiving/sending or during a call. In particular, the radio frequency circuit 102 may deliver downlink data received from a base station to the processor 101 for processing; and send uplink-related data to the base station. Usually, the radio frequency circuit includes but is not limited to an antenna, at least one amplifier, a transceiver, a coupler, a low noise amplifier, a duplexer, or the like. In addition, the radio frequency circuit 102 may communicate with another device through radio communication. Any communications standard or protocol may be used for the radio communication, including but not limited to a global system for mobile communications, general packet radio service, code division multiple access, wideband code division multiple access, long term evolution, email, short message service, and the like.

The memory 103 is configured to store an application program and data. The processor 101 performs various functions and data processing of the mobile phone 100 by running program code and data stored in the memory 103. The memory 103 mainly includes a program storage area and a data storage area, where the program storage area may store an operating system and an application program required by at least one function (for example, an audio playing function or an image playing function); and the data storage area may store data (for example, audio data or a phonebook) created according to use of the mobile phone 100. In addition, the memory 103 may include a high-speed random access memory, and may further include a nonvolatile memory, for example, a magnetic disk memory, a flash memory, or another volatile solid-state memory. The memory 103 may store various operating systems, for example, an iOS operating system developed by Apple and an Android operating system developed by Google.

The touchscreen 104 may include a touch pad 104-1 and a display 104-2. The touch pad 104-1 can collect a touch event (for example, an operation performed by a user on the touch pad 104-1 or nearby the touch pad 104-1 by using a finger or any proper object such as a stylus) of a user of the mobile phone 100 on or nearby the touch pad 104-1, and send collected touch information to another device, for example, the processor 101. Although the touch pad 104-1 and the display 104-2 shown in FIG. 2 serve as two independent components to implement input and output functions of the mobile phone 100, in some embodiments, the touch pad 104-1 and the display 104-2 may be integrated to implement the input and output functions of the mobile phone 100.

In this embodiment of this application, the mobile phone 100 may further have a fingerprint identification function. For example, a fingerprint collection device 113 may be arranged at the back (for example, below a rear camera) of the mobile phone 100, or a fingerprint collection device 113 may be arranged at the front (for example, below the touchscreen 104) of the mobile phone 100. For another example, the touchscreen 104 may be equipped with a fingerprint collection device 113 to implement the fingerprint identification function. In other words, the fingerprint collection device 113 may be integrated with the touchscreen 104 to implement the fingerprint identification function of the mobile phone 100. In this case, the fingerprint collection device 113 may be arranged as a part of the touchscreen 104 in the touchscreen 104, or may be arranged in another manner in the touchscreen 104. In this embodiment of this application, a major component of the fingerprint collection device 112 is a fingerprint sensor. The fingerprint sensor may use any type of sensing technology, including but not limited to an optical, capacitive, piezoelectric, or ultrasonic sensing technology, or the like.

In this embodiment of this application, the mobile phone 100 may further include a Bluetooth apparatus 105, configured to implement data exchange between the mobile phone 100 and another short-range electronic device (for example, a mobile phone or a smartwatch). The Bluetooth apparatus in this embodiment of this application may be an integrated circuit, a Bluetooth chip, or the like.

The Wi-Fi apparatus 107 is configured to provide the mobile phone 100 with network access in compliance with a Wi-Fi-related standard protocol. The mobile phone 100 may access a Wi-Fi access point by using the Wi-Fi apparatus 107, to help a user receive/send an email, browse a web page, access streaming media, or the like. The Wi-Fi apparatus 107 provides a user with wireless broadband internet access. In some other embodiments, the Wi-Fi apparatus 107 may also serve as a Wi-Fi wireless access point, to provide another electronic device with Wi-Fi network access.

The mobile phone 100 may further include at least a sensor 106, for example, a light sensor, a motion sensor, or another sensor. Specifically, the light sensor may include an ambient light sensor and a proximity sensor, where the ambient light sensor can adjust brightness of a display of the touchscreen 104 according to intensity of an ambient light, and the proximity sensor can switch off the display when the mobile phone 100 moves to an ear. As a kind of motion sensors, an accelerometer sensor can detect values of accelerations in various directions (usually in three axes), can detect a magnitude and direction of gravity when the mobile phone is still, and may be used for an application (for example, screen switching between a portrait mode and a landscape mode, a related game, or magnetometer posture calibration) for recognizing a posture of the mobile phone, a function (for example, a pedometer or a keystroke) related to vibration recognition, or the like. For other sensors with which the mobile phone 100 may further be equipped, for example, a gyroscope, a barometer, a humidity meter, a thermometer, and an infrared sensor, details are not described herein.

The positioning apparatus 108 is configured to provide the mobile phone 100 with a geographical location. It may be understood that the positioning apparatus 108 may be specifically a receiver of a positioning system, for example, a global positioning system (GPS), a Beidou navigation satellite system, or a Russian GLONASS. After receiving a geographical location sent by the foregoing positioning system, the positioning apparatus 108 sends the information to the processor 101 for processing, or sends the information to the memory 103 for storage. In some other embodiments, the positioning apparatus 108 may alternatively be a receiver of an assisted global positioning system (AGPS). The AGPS system serves as an auxiliary server to assist the positioning apparatus 108 to complete ranging and positioning services. In this case, the auxiliary positioning server communicates with the positioning apparatus 108 (namely, a GPS receiver) of an electronic device such as the mobile phone 100, through a wireless communications network to provide assistance in positioning. In some other embodiments, the positioning apparatus 108 may alternatively use a positioning technology based on a Wi-Fi access point. Each Wi-Fi access point has a globally unique MAC address. When Wi-Fi is enabled on the electronic device, the electronic device can scan and collect broadcast signals of surrounding Wi-Fi access points. Therefore, MAC addresses broadcast by the Wi-Fi access points can be obtained. The electronic device sends these data (for example, MAC addresses) that can be used to identify the Wi-Fi access points to a location server by using the wireless communications network. The location server retrieves a geographical location of each Wi-Fi access point, calculates a geographical location of the electronic device with reference to strengths of the Wi-Fi broadcast signals, and sends the geographical location of the electronic device to the positioning apparatus 108 of the electronic device.

The audio frequency circuit 109, a loudspeaker 114, and a microphone 115 can provide an audio interface between a user and the mobile phone 100. The audio frequency circuit 109 can transmit, to the loudspeaker 113, an electrical signal that is converted from received audio data. The loudspeaker 113 converts the electrical signal into an acoustical signal and outputs the acoustical signal. In addition, the microphone 115 converts a collected acoustical signal into an electrical signal; and the audio frequency circuit 109 receives the electrical signal, converts the electrical signal into audio data, and then outputs the audio data to the RF circuit 102, so as to send the audio data to, for example, another mobile phone, or outputs the audio data to the memory 103 for further processing.

The peripheral interface 110 is configured to provide an external input/output device (for example, a keypad, a mouse, an external display, an external memory, or a subscriber identification module card) with various interfaces. For example, the mobile phone 100 is connected to a mouse by using a universal serial bus (universal serial bus, USB) interface, or connected to a subscriber identification module (subscriber identification module, SIM) card provided by a telecommunications carrier by using a metal contact in a card slot for the subscriber identification module card. The peripheral interface 110 may be configured to couple the external peripheral input/output device to the processor 101 and the memory 103.

The mobile phone 100 may further include a power supply apparatus 111 (for example, a battery and a power management chip) to supply power to various components. The battery may be logically connected to the processor 101 by using the power management chip, to implement functions such as charging/discharging management and power consumption management by using the power supply apparatus 111.

In addition, the mobile phone 100 shown in FIG. 2 may further include a camera module 112 (a front camera module and/or a rear camera module), a camera flash, a miniature projection apparatus, a near field communication (near field communication, NFC) apparatus, or the like. Details are not described herein. In this embodiment of this application, the processor 101 executes the program code in the memory 103 to implement the following operations: driving the camera module 112 to emit a projected light beam of a reference structured light pattern to a photographed object; controlling the camera module 112 to receive a reflected light ray after the photographed object reflects the projected light beam, and generating a photographed structured light pattern based on the reflected light ray; and obtaining, based on the reference structured light pattern and the photographed structured light pattern, three-dimensional information of the photographed object, for example, length information, width information, and depth information of the photographed object.

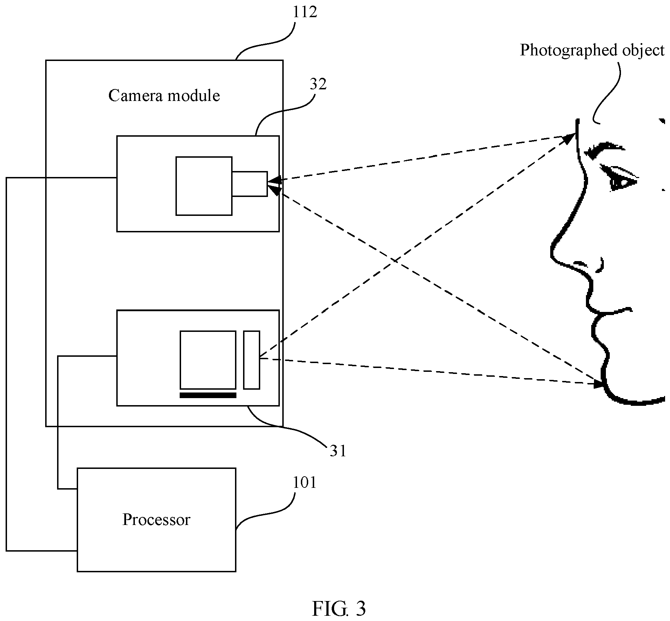

Based on the foregoing terminal device, an embodiment of this application provides a camera module 112, as shown in FIG. 3, including a projector 31 and a light ray collection module 32. The projector 31 is configured to emit a projected light beam of a reference structured light pattern to a photographed object. The light ray collection module 32 is configured to: receive a reflected light ray after the photographed object reflects the projected light beam, and generate a photographed structured light pattern based on the reflected light ray.

For example, the processor 101 drives the projector 31 of the camera module 112 to emit a projected light beam of a reference structured light pattern to a photographed object, so as to form a particular structured light pattern on the photographed object. The processor 101 is mainly configured to control switching-on/switching-off of a light source of the projector 31 and a frequency of the light source, to generate the projected light beam of the reference structured light pattern. In addition, the processor 101 may control the light ray collection module 32 to receive a reflected light ray after the photographed object reflects the projected light beam. Because the photographed object has a three-dimensional structure, a photographed structured light pattern generated by the light ray collection module 32 based on the reflected light ray distorts relative to the reference structured light pattern. Therefore, the processor 112 can capture the distortion based on the reference structured light pattern and the photographed structured light pattern, to generate three-dimensional information of the photographed object. The light ray collection module 32 mainly includes an imaging lens, a light filter, an image sensor, and the like. Specifically, the processor 101 further has the following functions: preprocessing of the photographed structured light pattern obtained by the light ray collection module 32, for example, image noise reduction, image enhancement, and image segmentation. In addition, the processor 101 is further configured to: control signal synchronization between the projector 31 and the camera 32, process the obtained three-dimensional information, and provide processed three-dimensional information to different applications.

It may be understood that, to implement the foregoing functions of the processor, the terminal device includes corresponding hardware structures and/or software modules for performing the functions. A person skilled in the art should easily be aware that, in combination with the example units, algorithms, and steps described in the embodiments disclosed in this specification, the embodiments of the present invention may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the embodiments of the present invention.

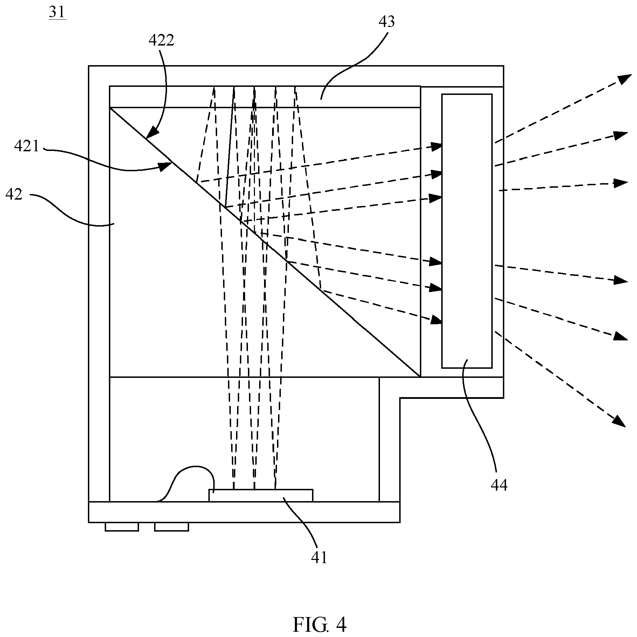

As shown in FIG. 4, the projector 31 includes a light source 41, a first optical device 42, a second optical device 43, and a projection device 44. The first optical device 42 includes a transmission surface 421 and a reflective surface 422. The transmission surface 421 faces the light source 41, and the reflective surface 422 faces the second optical device 43.

The light source 41 is configured to emit a first light ray with a first polarization direction to the transmission surface 421 of the first optical device 42; the transmission surface 421 of the first optical device 42 is configured to transmit the first light ray with the first polarization direction, so that the transmitted first light ray is emitted to the second optical device 43, where the transmitted first light ray has the first polarization direction; the second optical device 43 is configured to: turn the transmitted first light ray into a second light ray with a second polarization direction, and emit the second light ray with the second polarization direction to the reflective surface 422 of the first optical device 42, where the second polarization direction is different from the first polarization direction; the reflective surface 422 of the first optical device 42 is configured to reflect the second light ray with the second polarization direction, so that the reflected second light ray is emitted to the projection device 44; and the projection device 44 is configured to diffract the reflected second light ray, to form a projected light beam.

In an illustrative solution, an included angle between a propagation direction of the second light ray with the second polarization direction and a propagation direction of the transmitted first light ray is greater than or equal to 150 degrees; and an included angle between the propagation direction of the second light ray with the second polarization direction and a propagation direction of the reflected second light ray is greater than or equal to 70 degrees, and less than or equal to 110 degrees.

For example, the first optical device 42 includes a polarization beam splitter PBS, and after the first light ray with the first polarization direction is transmitted through the transmission surface 421 of the PBS, the transmitted first light ray is emitted; and after the second light ray with the second polarization direction is reflected through the reflective surface 422 of the PBS, the reflected second light ray is emitted to the projection device 44.

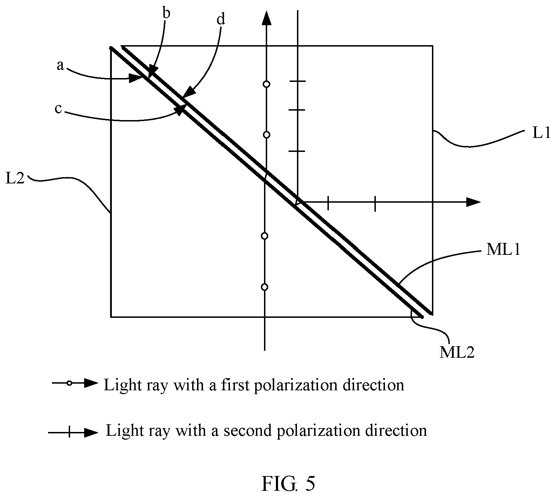

As shown in FIG. 5, the polarization beam splitter PBS may include two prisms: L1 and L2. The prism L1 and the prism L2 are disposed opposite to each other. In other words, a main interface ML1 of the prism L1 and a main interface L2 of the prism L2 oppositely fit with each other. Depending on different media at two sides of the main interfaces, an inner side of the main interface ML1 may be defined as a side d, and an outer side (a side that fits with the prism L1) of the main interface ML1 may be defined as a side c; and an inner side of the main interface ML2 may be defined as a side a, and an outer side (a side that fits with the prism L2) of the main interface ML2 may be defined as a side b. When the PBS is applied as the first optical device shown in FIG. 4, the main interface ML1 includes the transmission surface 421 (namely, the main interface ML1 or the side c of the main interface ML1), and the main interface ML2 includes the reflective surface 421 (namely, the main interface ML2 or the side b of the main interface ML2). When a light ray with a first polarization direction is transmitted through the first optical device, the light ray with the first polarization direction passes through the main interface ML2 and the main interface ML1 in turn in a propagation direction of the light ray with the first polarization direction, that is, passes through the side a, the side b, the side c, and the side d in turn. When a light ray with a second polarization direction is reflected by the first optical device, the light ray with the second polarization direction is first transmitted by the main interface ML1 and is then reflected at the main interface ML2 in a propagation direction of the light ray with the second polarization, that is, reflected by the side b of the main interface ML2. The first polarization direction is different from the second polarization direction. As shown in FIG. 5, in an example, the first polarization direction is perpendicular to the second polarization direction.

In the foregoing solution, the light source emits the first light ray with the first polarization direction to the transmission surface of the first optical device; the first light ray is transmitted through the transmission surface of the first optical device to the second optical device; the second optical device turns the polarization direction of the transmitted first light ray into the second polarization direction, and emits the second light ray with the second polarization direction to the reflective surface of the first optical device, where the second polarization direction is different from the first polarization direction; the reflective surface of the first optical device reflects the second light ray with the second polarization direction, so that the reflected second light ray is emitted to the projection device; and then the projection device diffracts the reflected second light ray, to form a projected light beam. In this process, because the second optical device cooperates with the first optical device to fold a light ray, a size of the light projector is reduced while an optical path long enough is ensured between the light source and a projection module, thereby reducing a size of a camera module and further facilitating development of a terminal device toward a lightweight and thin structure.

The second optical device 43 includes a glass slide 431 and a first reflective element 432. The glass slide 431 is configured to: turn the transmitted first light ray into a third light ray with a third polarization direction, and emit the third light ray with the third polarization direction to the first reflective element 432. The first reflective element 432 is configured to reflect the third light ray with the third polarization direction, so that the reflected third light ray is emitted to the glass slide 431. The glass slide 431 is further configured to turn the reflected third light ray into the second light ray with the second polarization direction. In this process, the glass slide 431 and the first reflective element 432 cooperate with the first optical device 42 to fold a light ray. For example, the glass slide 431 may be a 1/4 glass slide, and the first reflective element 432 may be a total-reflection mirror.

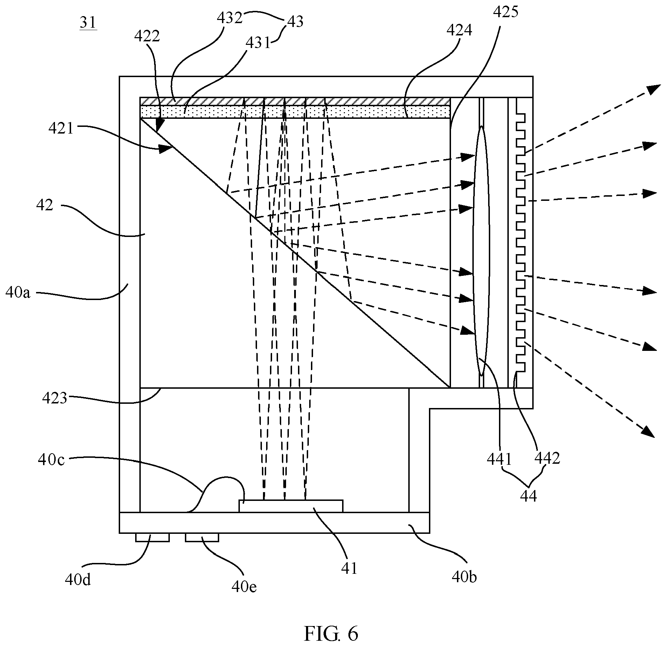

In this solution, the first polarization direction is different from the second polarization direction. In an example, the first polarization direction is perpendicular to the second polarization direction. For example, in a vertical coordinate system, if the first polarization direction represents that a phase of a light ray has a polarization state in an x-axis direction, the second polarization direction represents that a phase of a light ray has a polarization state in a y-axis direction; and there is a phase delay of $\pi/2$ or an odd multiple of $\pi/2$ between the first polarization direction and the second polarization direction. Each time a light ray passes through a 1/4 glass slide, a phase of the light ray may be delayed by $\pi/4$. Based on this principle, the 1/4 glass slide delays a phase of the transmitted first light ray by $\pi/4$, to form the third light ray with the third polarization direction, and emits the third light ray with the third polarization direction to the first reflective element 432. The first reflective element 432 reflects the third light ray with the third polarization direction, and emits the reflected third light ray to the 1/4 glass slide. The 1/4 glass slide delays a phase of the reflected third light ray by $\pi/4$, to form the second light ray with the second polarization direction. Specifically, as shown in FIG. 6, a PBS 42 is usually a hexahedral cube structure including two prisms (as shown in FIG. 5), and includes a transmission surface 421, a reflective surface 422, an incident surface 423, a first emergent surface 424, and a second emergent surface 425. The incident surface 423 is opposite to the first emergent surface 423. On the two prisms, the incident surface 423 intersects with the reflective surface 422; the first emergent surface 424 and the second emergent surface 425 intersect with the transmission surface 421; the second emergent surface 425 is perpendicular to the incident surface 423; the transmission surface 421 and the reflective surface 422 are located between the incident surface 423 and the second emergent surface 425; and an included angle between the incident surface 423 and the reflective surface 422 is equal to an included angle between the transmission surface 421 and the second emergent surface 425. After entering the PBS 42 from the incident surface 423, a light ray with the first polarization direction passes through the transmission surface 421 and then is emitted from the first emergent surface 424 of the PBS 42. A light ray with the second polarization direction enters the PBS 42 from the first emergent surface 422. The light ray with the second polarization direction is reflected by the reflective surface 422, and then emitted from the second emergent surface 425 of the PBS 42. In addition, the foregoing elements or components are fastened by using a mirror holder 40a, and the light source 41 is disposed on a base 40b that is fastened to the mirror holder 40a, where a conducting wire 40c and electrodes (40d and 40e) are disposed on the base 40b, to supply power to the light source 41. It may be understood that, the electrodes (40d and 40e) are connected to the processor 101, so as to output a drive signal to the light source 41; and at least one electrode may be disposed on the base, depending on different forms of the drive signal.

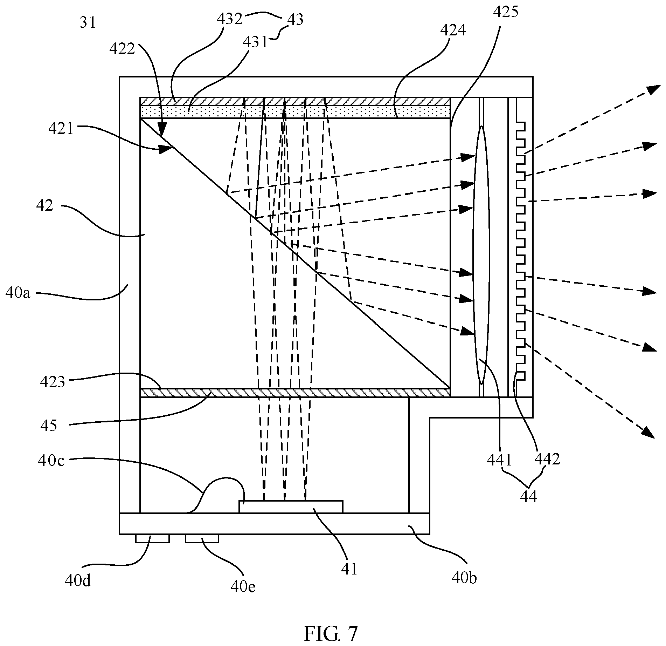

Because the first optical device 42 transmits only the first light ray with the first polarization direction, after a light ray enters the first optical device 42, light rays in a polarization state except the first light ray with the first polarization direction cannot be transmitted. To prevent other light rays in the polarization state from entering the first optical device 42, as shown in FIG. 7, the projector 31 further includes a polarizer 45. The polarizer 45 is disposed between the light source 41 and the first optical device 42. The light source 41 is configured to emit an incident light ray to the polarizer 45. The polarizer 45 is configured to let the first light ray with the first polarization direction in the incident light ray pass through, so that the first light ray with the first polarization direction is emitted to the first optical device 42. Usually the light source is a laser light source, and generally an output light beam of a laser is linearly polarized. It is assumed that a major polarization direction of the laser is an x direction, and during arrangement of the polarizer 45, a direction in which a light ray is passed through should also be the x direction. When a polarization ratio of the laser is relatively large, that is, there is a relatively great difference between energy of polarization of the x direction and energy of polarization of a y direction, for example, when the polarization ratio is 100:1, the polarizer 45 may not be used.

As shown in FIG. 6 and FIG. 7, the projection module 44 includes a lens 441 and a diffractive optical element 442. The lens 441 is configured to collimate the reflected second light ray to form a collimated light ray, so that the collimated light ray is emitted to the diffractive optical element 442, where the collimated light ray has a predefined field of view FOV. The diffractive optical element 442 is configured to perform replication and beam expansion on the collimated light ray, to form the projected light beam. For example, the diffractive optical element 442 includes a diffraction grating.

The light source 41 includes any one of the following: a vertical cavity surface emitting laser VCSEL chip and an edge emitting laser EEL chip.

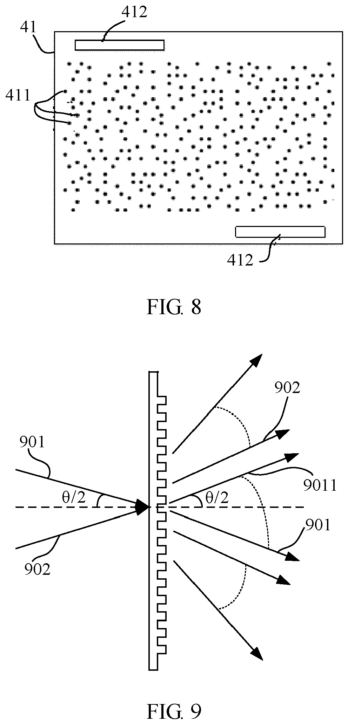

To achieve a desired measurement effect, usually the reference structured light pattern of the projected light beam is a random or pseudo-random scattered-spot pattern, or a particular pattern with repetitive periodic graphs or non-repetitive graphs. Description is given by using a scattered-spot pattern as an example. As shown in FIG 8, luminous points 411 of a VCSEL chip 41 are arranged in an irregular manner, and there are about 300 luminous points. A particular distance is kept between centers of the luminous points. For example, a minimum spacing of about 20um can be attained according to a current technology. Electrodes 412 are arranged around a luminous region. After a light beam emitted by the luminous points 411 is folded by the PBS and collimated by the lens, a particular FOV (a zero-level FOV) is formed. After the diffractive optical element DOE performs replication and beam expansion on the zero-level FOV, a greater FOV is formed, where the DOE is usually a diffraction grating. The diffraction grating has functions of replication and beam expansion on the zero-level FOV As shown in FIG. 9, it is assumed that the zero-level FOV obtained after a light ray is emitted from the lens is θ, a light ray 901 and a light ray 902 are respectively an upper light ray and a lower light ray of the zero-level FOV, and a light ray 9011 is a first-order diffracted light ray of the upper light ray 901 of the zero-level FOV Assuming that seamless connection between the zero-level FOV and the first-order diffracted FOV needs to be implemented, a grating equation applies as follows:

$$2d\sin(\theta/2) = \lambda \quad (1)$$

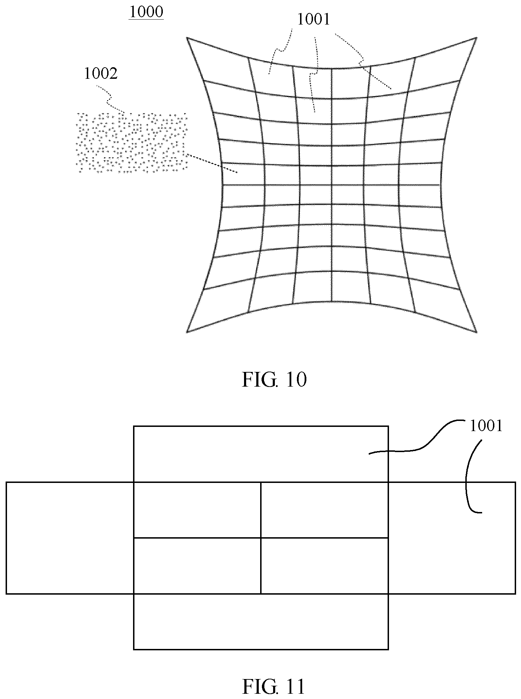

d is a grating constant, and λ is a wavelength of an incident light ray. An FOV greater than the zero-level FOV may be ultimately formed after a plurality of orders of diffraction. For example, a projected pattern 1000 shown in FIG. 10 is formed by splicing a plurality of sub-regions 1001, where a pattern 1002 in each sub-region should correspond to a pattern that is formed by arranging the luminous points of the VCSEL chip. Because the replication and beam expansion of the light beam satisfies the foregoing grating equation (1), when projection of a greater angle is formed, an obvious pincushion distortion shown in FIG. 10 is generated on the projected pattern. It should be pointed out that, in the foregoing embodiment, it is assumed that the splicing of the sub-regions 1001 is non-overlapping splicing; and sometimes partial overlapping may be generated between the sub-regions, to obtain more characteristic points of projection or a more complicated projected pattern. For example, in FIG. 11, there is a 50% overlapping area between the sub-regions 1001 in both a horizontal direction and a vertical direction. Therefore, under a same projection FOV condition, a quantity of scattered spots obtained in this overlapping splicing manner is about three times that in a non-overlapping manner, and in this case the grating constant d should be about half that in the non-overlapping manner. Therefore, when the percentage of overlapping areas varies, parameters such as the grating constant also vary.

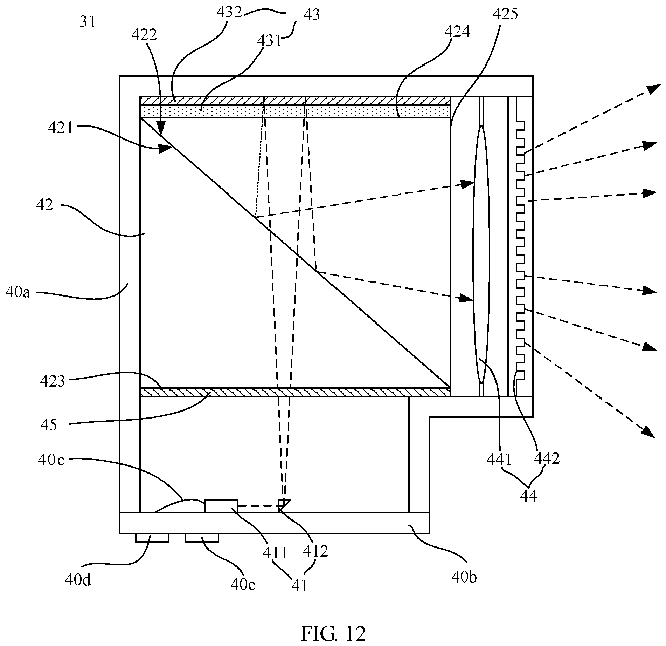

When the light source 41 uses an EEL chip, desired brightness uniformity can be obtained for the projected pattern and also the problem of distortion of the projected pattern can be resolved. In addition, when the light source 41 uses an EEL chip, the projected pattern may be any shape or scattered spot and does not need to be periodic, and therefore higher reliability can be obtained during calculation of the three-dimensional information. When an EEL chip is used as the light source, the DOE may be a random-phase DOE. Phase distribution of a random-phase DOE can be calculated based on amplitude and phase distribution of an incident light beam and amplitude and phase distribution of an emergent light field. A common algorithm is, for example, a Gerchberg-Saxton (Gerchberg-Saxton, GS) algorithm, a Yang-GU (Yang-GU, YG) algorithm, or a rigorous coupled wave analysis (Rigorous Coupled Wave Analysis, RCWA) algorithm. When the light source includes an EEL chip 411, as shown in FIG. 12, the light source further includes a second reflective element 412, where the second reflective element 412 is configured to reflect a light ray emitted by the EEL chip 411, so that the first light ray with the first polarization direction is emitted to the first optical device 42. The second reflective element may be a reflective prism or a total-reflection plane mirror. When a reflective element is an element based on a principle of total reflection, a higher reflectivity can be obtained.

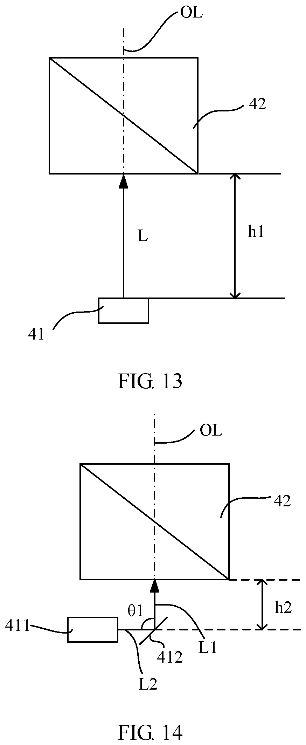

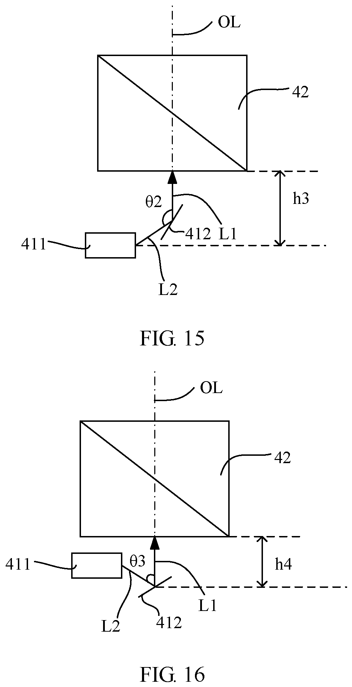

A length of the projector in an optical-axis OL direction of the first optical device affects an internal space design of a terminal device. In other words, if a propagation distance of an incident light ray between the second reflective element and the first optical device is too long, the length of the projector in the optical-axis OL direction of the first optical device will be relatively large, thereby affecting the internal space design of the terminal device. Therefore, the reflecting, by the second reflective element, a light ray emitted by the EEL chip to the first optical device is equivalent to converting a light ray propagation direction. In this way, when a length of an optical path from the EEL chip to the first optical device is determinate, a propagation distance of the incident light ray between the second reflective element and the first optical device can be shortened by appropriately increasing a propagation distance of the light ray emitted by the EEL chip between the EEL chip and the second reflective element, to help reduce the size of the projector in the optical-axis direction of the first optical device, thereby better improving utilization of the internal space of the terminal device and facilitating device miniaturization. As shown in FIG. 13, when the light source 411 uses a vertical cavity surface emitting laser VCSEL, an incident light ray L is emitted from the VCSEL chip to the first optical device 42. The size of the projector in the optical-axis OL direction of the first optical device is determined by a length h1 of the incident light ray L, and a distance from the VCSEL chip to the first optical device 42 is at least h1. When the structure shown in FIG. 12 is used, as shown in FIG. 14 to FIG. 16, because the second reflective element 412 reflects a light ray, if a total length of the optical path from the EEL chip to the first optical device 42 is L1 + L2 = h1 (the length of the incident light ray L): When $\theta2 = 90°$, as shown in FIG. 14, it is determined that the size of the projector in the optical-axis OL direction of the first optical device is h2 < h1; or when $\theta2 > 90°$, as shown in FIG. 15, it is determined that the size of the projector in the optical-axis OL direction of the first optical device is h3 < h1; or when $\theta2 < 90°$, as shown in FIG. 16, it is determined that the size of the projector in the optical-axis OL direction of the first optical device is h4 < h1. In other words, as long as the optical path for light ray propagation between the EEL chip and the first optical device 42 is bent by using the second reflective element 412, when the length of the optical path between the light source and the first optical device is determinate, the length of the projector in the optical-axis direction of the first optical device can be reduced.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A projector, comprising: a light source, a first optical device, a second optical device, and a projection device, wherein the first optical device comprises a transmission surface and a reflective surface, the transmission surface faces the light source, and the reflective surface faces the second optical device;
the light source is configured to emit a first light ray with a first polarization direction to the transmission surface of the first optical device;
the transmission surface of the first optical device is configured to transmit the first light ray with the first polarization direction, so that the transmitted first light ray is emitted to the second optical device, wherein the transmitted first light ray has the first polarization direction;
the second optical device is configured to: turn the transmitted first light ray into a second light ray with a second polarization direction, and emit the second light ray with the second polarization direction to the reflective surface of the first optical device, wherein the second polarization direction is different from the first polarization direction;
the reflective surface of the first optical device is configured to reflect the second light ray with the second polarization direction, so that the reflected second light ray is emitted to the projection device, wherein the reflected second light ray has the second polarization direction; and
the projection device is configured to diffract the reflected second light ray, to form a projected light beam.

2. The projector according to claim 1, wherein an included angle between a propagation direction of the second light ray with the second polarization direction and a propagation direction of the transmitted first light ray is greater than or equal to 150 degrees.

3. The projector according to claim 1 or 2, wherein an included angle between the propagation direction of the second light ray with the second polarization direction and a propagation direction of the reflected second light ray is greater than or equal to 70 degrees, and less than or equal to 110 degrees.

4. The projector according to any one of claims 1 to 3, wherein the first optical device is a polarization beam splitter PBS;

after the first light ray with the first polarization direction is transmitted through the transmission surface of the PBS, the transmitted first light ray is emitted; and

after the second light ray with the second polarization direction is reflected through the reflective surface of the PBS, the reflected second light ray is emitted to the projection device.

5. The projector according to any one of claims 1 to 4, wherein the second optical device comprises a glass slide and a first reflective element;

the glass slide is configured to: turn the transmitted first light ray into a third light ray with a third polarization direction, and emit the third light ray with the third polarization direction to the first reflective element;

the first reflective element is configured to reflect the third light ray with the third polarization direction, so that the reflected third light ray is emitted to the glass slide; and

the glass slide is further configured to turn the reflected third light ray into the second light ray with the second polarization direction.

6. The projector according to claim 5, wherein the glass slide is a 1/4 glass slide.

7. The projector according to any one of claims 1 to 6, wherein the projection device comprises a lens and a diffractive optical element;

the lens is configured to collimate the reflected second light ray to form a collimated light ray, so that the collimated light ray is emitted to the diffractive optical element, wherein the collimated light ray has a predefined field of view FOV; and

the diffractive optical element is configured to perform replication and beam expansion on the collimated light ray, to form the projected light beam.

8. The projector according to claim 7, wherein the diffractive optical element comprises a diffraction grating.

9. The projector according to any one of claims 1 to 8, wherein the projector further comprises a polarizer;

the polarizer is disposed between the light source and the first optical device, and the light source is configured to emit an incident light ray to the polarizer; and

the polarizer is configured to let the first light ray with the first polarization direction in the incident light ray pass through, so that the first light ray with the first polarization direction is emitted to the first optical device.

10. The projector according to any one of claims 1 to 9, wherein the light source comprises any one of the following: a vertical cavity surface emitting laser VCSEL chip and an edge emitting laser EEL chip.

11. The projector according to claim 10, wherein when the light source comprises the EEL chip, the light source further comprises a second reflective element; and

the second reflective element is configured to reflect a light ray emitted by the EEL chip, so that the first light ray with the first polarization direction is emitted to the first optical device.

12. The projector according to claim 11, wherein the second reflective element comprises a reflective prism or a total-reflection plane mirror.

13. A camera module, wherein the camera module comprises the projector according to any one of claims 1 to 12 and a light ray collection module;

the projector is configured to emit a projected light beam of a reference structured light pattern to a photographed object; and

the light ray collection module is configured to: receive a reflected light ray after the photographed object reflects the projected light beam, and generate a photographed structured light pattern based on the reflected light ray.

14. A terminal device, wherein the terminal device comprises the camera module according to claim 13, a processor, and a memory; both the camera module and the memory are coupled to the processor; and the processor is configured to execute program code in the memory, to implement the following operations:

driving the camera module to emit a projected light beam of a reference structured light pattern to a photographed object; controlling the camera module to receive a reflected light ray after the photographed object reflects the projected light beam, and generating a photographed structured light pattern based on the reflected light ray; and

obtaining three-dimensional information of the photographed object based on the reference structured light pattern and the photographed structured light pattern.

FIG. 1

100

| 102 | Radio frequency circuit |
| Wi-Fi apparatus | 107 |

101

| 108 | Positioning apparatus |
| 111 | Power supply apparatus |
| 103 | Memory |
| 110 | Peripheral interface |
| 104 | Touch pad | Display |

Processor

| Audio frequency circuit | 109 |
| 114 |
| 115 |
| Bluetooth apparatus | 105 |
| Sensor | 106 |
| Fingerprint collection device | 113 |

Camera module | 112

FIG. 2

FIG. 3

FIG. 4

—o→ Light ray with a first polarization direction

—|→ Light ray with a second polarization direction

FIG. 5

FIG. 6

FIG. 7

FIG. 8

FIG. 9

1000

1001

1002

FIG. 10

1001

FIG. 11

FIG. 12

OL

42

L

h1

41

FIG. 13

OL

42

θ1

411

412

L1

h2

L2

FIG. 14

OL

42

θ2

411

412 L1

h3

L2

FIG. 15

OL

42

411

θ3

412

L1

h4

L2

FIG. 16

## INTERNATIONAL SEARCH REPORT

| International application No. |
| --- |
| **PCT/CN2018/097671** |

### A. CLASSIFICATION OF SUBJECT MATTER

G02B 27/18(2006.01)i; G02B 27/28(2006.01)i

According to International Patent Classification (IPC) or to both national classification and IPC

### B. FIELDS SEARCHED

Minimum documentation searched (classification system followed by classification symbols)

G02B, G03B

Documentation searched other than minimum documentation to the extent that such documents are included in the fields searched

Electronic data base consulted during the international search (name of data base and, where practicable, search terms used)

VEN; CNABS: 偏振, 投影, 透射, 反射, 光源, 三维, 立体, 3D, polarize, project, transmission, reflect, light source, three dimensional, stereo

### C. DOCUMENTS CONSIDERED TO BE RELEVANT

| Category* | Citation of document, with indication, where appropriate, of the relevant passages | Relevant to claim No. |
| --- | --- | --- |
| X | CN 103207507 A (CORETRONIC CORPORATION) 17 July 2013 (2013-07-17) description, paragraphs 20-83, and figures 1A-1D | 1-10 |
| Y | CN 103207507 A (CORETRONIC CORPORATION) 17 July 2013 (2013-07-17) description, paragraphs 20-83, and figures 1A-1D | 11-14 |
| Y | CN 101303454 A (FUZHOU GAOYI OPTICS CO., LTD.) 12 November 2008 (2008-11-12) description, page 3, lines 1-16 | 11, 12 |
| Y | CN 104200456 A (SICHUAN UNIVERSITY) 10 December 2014 (2014-12-10) description, paragraphs 2-14 | 13, 14 |
| A | JP 10221640 A (SEIKO EPSON CORP.) 21 August 1998 (1998-08-21) entire document | 1-14 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 January 2019** | **25 January 2019** |

| Name and mailing address of the ISA/CN | Authorized officer |
| --- | --- |
| **State Intellectual Property Office of the P. R. China (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2018/097671**

| Patent document cited in search report | | | Publication date (day/month/year) | Patent family member(s) | | | Publication date (day/month/year) |
|---|---|---|---|---|---|---|---|
| CN | 103207507 | A | 17 July 2013 | US | 9152031 | B2 | 06 October 2015 |
| | | | | CN | 103207507 | B | 08 July 2015 |
| | | | | US | 2013176540 | A1 | 11 July 2013 |
| CN | 101303454 | A | 12 November 2008 | None | | | |
| CN | 104200456 | A | 10 December 2014 | CN | 104200456 | B | 16 June 2017 |
| JP | 10221640 | A | 21 August 1998 | JP | H10221640 | A | 21 August 1998 |
| | | | | JP | 3620196 | B2 | 16 February 2005 |

Form PCT/ISA/210 (patent family annex) (January 2015)

**EP 3 693 785 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201711009929